# EUROPEAN PATENT APPLICATION

(11) **EP 3 742 307 A1**
(43) Date of publication of application: **25.11.2020**
(21) Application number: 20175779.6
(22) Date of filing: 20.05.2020
(51) Int. Cl.: G06F 16/903, H04L 12/743

(54) **MANAGING NETWORK TRAFFIC FLOWS**

(30) Priority: 21.05.2019 US 201962850897 P
(71) Applicant: F5 Networks, Inc, Seattle, WA 98104-1663 (US)
(72) Inventor: CAI, Hao, Seattle, wa Washington 98104 (US); MICHELS, Timothy S., Liberty Lake, wa Washington 99019 (US); Qi, LU, Seattle, wa Washington 98104 (US); ROMNEY, Ryan, Liberty Lake, wa Washington 99019 (US)
(74) Representative: Giraldi, Elisa

(57) **Abstract**

Technology related to managing network traffic flows is disclosed. In one example, a method can include searching a first data structure to determine whether a first entry associated with a network flow is present in the first data structure. In response to determining the first entry is present in the first data structure, at least a portion of the first entry can be used to generate an index for a flow cache. An action can be performed on the network packet as indicated by a flow cache entry, where the flow cache entry is located in the flow cache at the generated index.

## Description

### CROSS REFERENCE TO RELATED APPLICATION

This application claims the benefit of U.S. Provisional Patent Application Serial No. 62/850,897 filed May 21, 2019, which is hereby incorporated by reference in its entirety.

### FIELD

This technology generally relates to network traffic management.

### BACKGROUND

A software application can be distributed or partitioned across different computing devices. For example, a client-server architecture can partition tasks between a client device (such as a laptop or mobile device) and one or more server computers connected by an interconnection network (such as the Internet) and managed by a provider of computing service(s) and/or computing resource(s). The server computer(s) can execute software applications to provide virtual resources, software services, and/or content to the client devices. For example, client devices can initiate communication sessions with the server computers by sending requests over the interconnection network to the server computers, and the servers can respond to the requests. Additionally or alternatively, the server computers can push information (without an initiating request) to the client devices over the interconnection network. As the number of client devices seeking access to the server computers increases, intermediary computing devices, such as network traffic management computing device(s), can be added between the client devices and the server computers. Network traffic management computing device(s) can perform security and/or routing functions of the client-server architecture, such as encrypting and/or decrypting traffic between the client and the server. For example, the network traffic management computing device can potentially increase the scalability, availability, security, and/or performance of the client-server architecture. However, as the complexity of applications increases and the number of interconnected devices increases, there can be many challenges in implementing a high performance, highly available, and secure client-server architecture including an intermediary computing device.

### BRIEF SUMMARY

Generally, a system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One example includes a method implemented in cooperation with a network traffic management system including one or more network traffic management modules, networking modules, or server modules, the method including: searching a first data structure to determine whether a first entry associated with a network flow is present in the first data structure. The method also includes, in response to determining the first entry is present in the first data structure, using at least a portion of the first entry to generate an index for a flow cache. The method also includes performing an action on the network packet as indicated by a flow cache entry, where the flow cache entry is located in the flow cache at the generated index.

Other embodiments incorporating this example include corresponding computer systems, apparatus, and computer programs recorded on one or more non-transitory computer readable media (e.g., computer storage devices), each configured to perform the actions of the methods. An example computer system includes one or more network traffic management modules, networking modules, or server modules, memory comprising programmed instructions stored thereon, and one or more processors configured to be capable of executing the stored programmed instructions to perform the actions of the methods. An example non-transitory computer readable medium having stored thereon instructions for managing network traffic flows, the instructions comprising executable code that, when executed by one or more processors, causes the processors to perform the actions of the methods. An example network traffic management apparatus includes memory comprising programmed instructions stored thereon and one or more processors configured to be capable of executing the stored programmed instructions to perform the actions of the methods.

### BRIEF DESCRIPTION OF THE DRAWINGS

FIG. 1 is a block diagram of an example client-server architecture including a network traffic management apparatus.
FIG. 2 is a block diagram of an example network traffic management apparatus.
FIG. 3 is a flowchart of an example method for processing network packets, such as at a network traffic management apparatus.
FIG. 4 is a flowchart of an example method for processing network packets, such as at a network traffic management apparatus.
FIG. 5 is a flowchart of an example method for processing network packets, such as at a network traffic management apparatus.
FIG. 6 is a block diagram of an example intermediary server computer apparatus, such as a network traffic management apparatus.
FIG. 7 is a flowchart of an example method for processing network packets, such as at an intermediary server computer apparatus.
FIG. 8 is a flowchart of an example method for processing network packets, such as at an intermediary server computer apparatus.
FIG. 9 is a flowchart of an example method for processing network packets, such as at an intermediary server computer apparatus.
FIG. 10 is a flowchart of an example method for processing network packets, such as at an intermediary server computer apparatus.
FIG. 11 is a block diagram of an example computing environment, such as can be used for a network traffic management apparatus.

### DETAILED DESCRIPTION

### Introduction

An intermediary server computer, such as a network traffic management device, can perform various proxy and other services, such as load balancing, rate monitoring, caching, encryption/decryption, session management (including key generation), address translation, denial-of-service (DoS) protection, and/or access control, for example. For example, an intermediary server computer can act as a proxy for an application server. A proxy is an agent that is situated in a path of communication between a client and a server (e.g., an application server) that can intercept communications (e.g., network packets, frames, datagrams, and messages) between the client and the server. Load balancing can include distributing or disaggregating workloads from many clients across different server computers. The intermediary server computer can perform various control functions for network traffic transiting the intermediary server computer. For example, the intermediary server computer can allow, block, and/or meter traffic for a given network flow. Additionally, functions performed by the application server computer can be offloaded from the application server computer to the intermediary server computer.

The processing to be performed by the intermediary server computer can be varied for different network flows. A network flow can be identified by a signature of the network flow that is generated using different packet fields of a network packet of the network flow. As one example, the network packet can be formed according to a network stack (also referred to as a protocol stack). A network stack can be used to partition a communication system into different layers. As one example, the layers within a network packet can be described using the Open Systems Interconnection (OSI) model which partitions a communication system into seven layers. Lower level layers (e.g., layers 1-3) within the network stack can be used to manage voltage signaling and basic transport of the network traffic while higher level layers (e.g., layer 7) can be used to convey application data. A given network flow can be identified using the signature formed from one or more packet fields from one or more of the layers 2-7. Specifically, each network packet of the given network flow can include fields used to create the signature of the flow so that the network packet can be identified as belonging to the given network flow. Different network flows can be differentiated from each other because the different flows will have different signatures.

A network traffic management device can be architected to have a control plane and a data plane. As one example, the control plane can include a software-based control segment (CS) and the data plane can include a hardware-based data flow segment (DFS). The data plane can include a network interface for receiving packets from a network. The data plane can determine whether a network packet is to be handled by the data plane or whether additional processing of the network packet is to be performed by the control plane. A flow cache can be used to determine where the network packet will be processed. The flow cache includes information about different network flows. A hit in the flow cache for a network packet of a given network flow indicates that the flow cache includes information about the network flow in the flow cache. A miss in the flow cache for a network packet of a given network flow indicates that the flow cache does not include information about the network flow in the flow cache.

A miss in the flow cache can indicate that the network flow will be processed by the control plane. When there is a miss, the data plane can forward the packet to the control plane (e.g., via direct memory access (DMA)). The control plane can maintain a flow table of active network flows transiting the network traffic management device. The flow table can include information that is used to identify a network flow, an action to be performed on packets of the network flow, and additional information, such as performance counters. The flow table can be relatively large and so it can be stored in relatively large and slow memory and/or secondary storage (e.g., a flash drive or a hard disk drive). The flow table can be searched to determine an associated action for a packet and for other information related to the network flow. As one example, the control plane can perform the associated action on the network packet in software. Additionally, the control plane can determine when subsequent network packets of a network flow can be offloaded to the data plane hardware. When the subsequent network packets are to be handled by the data plane, the control plane can create and insert an entry in the flow cache for the network flow.

A hit in the flow cache can indicate that the network flow will be processed by the data plane. The data plane can include special-purpose and/or configurable hardware (such as field-programmable gate area (FPGA) logic) for processing network packets more efficiently than compared to a software implementation. Processing packets using the data plane can be referred to as offloading or hardware offloading. Operations that can be performed with hardware offloading can include operations such as packet transformations (e.g., network address translation), blacklisting (e.g., always deny), graylisting (e.g., admit up to a limit), whitelisting (e.g., always admit), and mitigation of DoS attacks. Hardware offloading can facilitate increased performance, lower latency, and higher throughput for network traffic. The flow cache can specify the operation to perform for a network packet of a network flow that is offloaded.

Generally, a flow cache is a data structure organized as a number of entries, where each entry can be used to store information related to a network flow. For example, the flow cache can be organized as a table, where individual entries can be accessed using an address or index of the flow cache. In one implementation, a flow cache can include a static random-access memory (SRAM) of a fixed size. The selected size can be a trade-off between capacity of the flow cache and a speed of the flow cache. Generally, the flow cache will be smaller than the flow table so that the flow cache has a faster access time than the flow table. The number of individually addressable locations of the memory of the flow cache can determine the number of entries that can be stored in the memory. The number of bits used to represent an address of the memory are likely to be smaller than the number of bits used to represent a signature of a network flow. One way to map the signature of a network flow to an address of the flow cache is by using a hashing algorithm. Generally, a hashing algorithm (also referred to as a hash function) can be used to transform an input value to an output value (also referred to as a hash value or a hash) within a range of the hashing algorithm. A table that is indexed by hash values can be referred to as a hash table. When a hash algorithm is used to map larger bit width signatures to smaller bit width hash values, multiple network flows can be mapped to the same index, causing a "collision." As used herein, a collision is caused by the signatures of multiple network flows mapping to the same hash value. A collision causes contention for the address of an entry from the multiple network flows.

One solution for handling collisions is to use chained references. Specifically, each entry of the flow cache can include a linked list that can be followed to search for information related to all network flows that collide at a given hash value. Each chained reference can cause a separate (sequential) lookup and comparison for each reference. For example, if fifteen signatures hash to the same hash value, an entry in the flow table can include a chain of references that can be sequentially followed to find information related to any of the colliding signatures. In this example, it can take potentially fifteen lookups and comparisons to find a particular network flow of interest. The number of collisions that occur at a particular hash value can vary over time based on patterns of network flow and can cause the processing time for a network packet to increase by a variable amount of time. Unlimited chaining at a given hash location can potentially eliminate any advantage of processing network packets in hardware. Limited chaining at a given hash location can reduce the number of network packets that can be offloaded for each location. Accordingly, the multiple lookups and comparisons associated with chained references can degrade performance, resulting in higher latency, higher jitter, and lower throughput which can potentially violate service level agreements (SLAs) and/or cause packets to be processed at less than wire speeds. Additionally, degraded performance of hardware offloading during an attack condition can potentially result in increased unavailability and other negative effects for a network and associated benign network traffic.

As disclosed herein, network flows can be managed using a flow cache without chaining, so that packet processing performance can be increased as compared to using a flow cache with chaining. Additionally, the packet processing performance may be more predictable since the potential for a variable string of lookups from chaining can be eliminated. As one example, a network traffic management device can include a flow cache storing entries containing information related to network flows. The flow cache can include entries that are indexed by hash values generated from signatures of the network flows. The size of the flow cache can be selected such that the flow cache is sparsely populated and to reduce the number of collisions. Unused entries (also referred to as free entries) of the flow cache can be tracked in a free list. When a collision is detected in the flow cache (e.g., when the signatures of multiple network flows hash to the same hash value), an entry in a separate collision data structure can be created and allocated for the colliding network flow. For example, the collision data structure can be a content addressable memory (CAM). A CAM (also referred to as an associative memory) is a memory that compares a search data input to data stored in the CAM and returns an address of the CAM where the search data is stored. The entry in the collision data structure for the colliding network flow can reference (e.g., point to) a newly allocated entry in the flow cache. Specifically, the newly allocated entry in the flow cache can be selected from the free list. Information about the colliding network flow can be stored in the newly allocated entry of the flow cache, and this entry can be used to determine how to process subsequent network packets of the colliding network flow. Accordingly, the flow cache can include (1) entries that are indexed by hash values generated from signatures of the network flows and (2) entries that are referenced from the collision data structure. The intermixing of the two types of entries within the flow cache can potentially enable the flow cache to operate at a higher utilization (e.g., less sparsely) than when the entries are only indexed by hash values.

### Example Architectures for Managing Network Traffic Flows

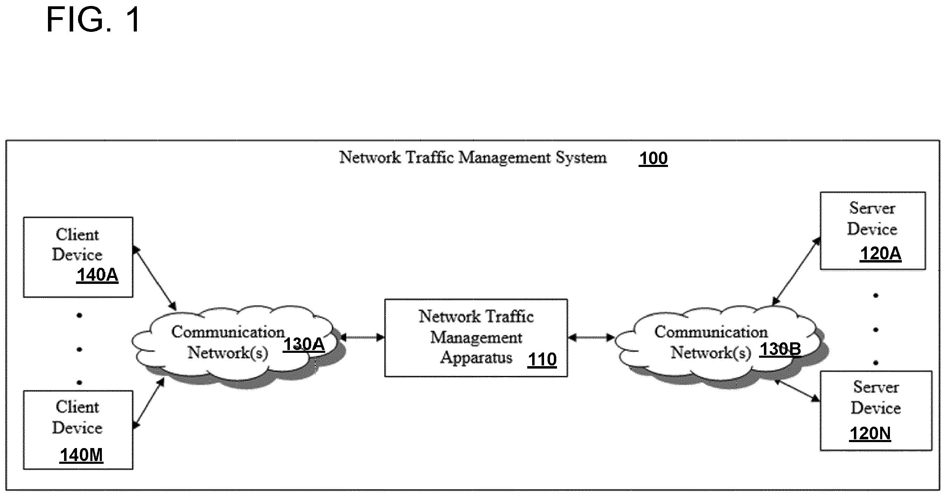

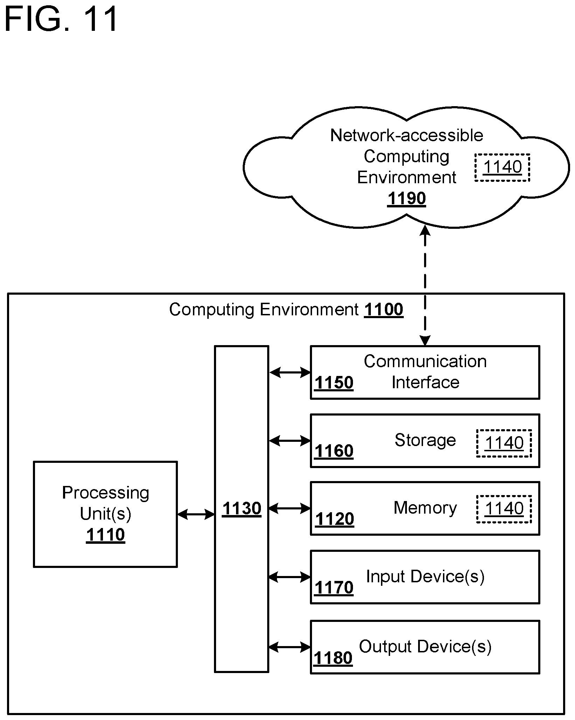

FIG. 1 is a block diagram of an example client-server architecture 100 (also referred to as a network traffic management system), including an intermediary server (e.g., the network traffic management apparatus 110), that can be used to perform a computing task that is distributed among different components of the client-server architecture 100. Specifically, FIG. 1 illustrates how network traffic can be forwarded by the intermediary server computer 110 to a server computer 120. The client-server architecture 100 can include the intermediary server computer 110, a server 120, communication network(s) 130, and a client device 140. The different components (110, 120, 130, 140) of the client-server architecture 100 can be implemented using a computing environment as described in more detail with reference to FIG. 11.

The network traffic management system 100 in this example includes a network traffic management apparatus 110 that is coupled to server devices 120A-N and client devices 140A-M via communication network(s) 130A-B, although the network traffic management apparatus, server devices, and client devices may be coupled together via other topologies. The network traffic management system 100 also may include other network devices such as routers or switches, for example, which are known in the art and thus will not be described herein. This technology provides a number of advantages including methods, non-transitory computer readable media, network traffic management systems, and network traffic management apparatuses that more effectively handle flow cache collisions to allow network traffic for an increased number of flows to be processed with improved performance via hardware offloading.

In this particular example, the network traffic management apparatus 110, server devices 120A-N, and client devices 140A-M are disclosed in FIG. 1 as dedicated hardware devices. However, one or more of the network traffic management apparatus 110, server devices 120A-N, or client devices 140A-M can also be implemented in software within one or more other devices in the network traffic management system 100. For example, the network traffic management apparatus 110 can be hosted by one or more of the server devices 120A-N, and other network configurations can also be used.

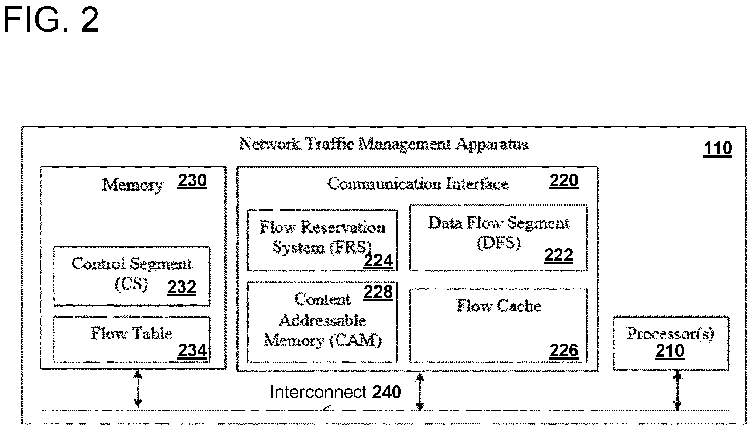

Referring to FIGS. 1-2, the network traffic management apparatus 110 of the network traffic management system 100 may perform any number of functions, including providing network security, load balancing network traffic across the server devices, proxying connections between the client devices and server devices, or accelerating network traffic associated with applications hosted by the server devices, for example. FIG. 2 illustrates an example architecture of the network traffic management apparatus 110. The network traffic management apparatus 110 can include one or more processor(s) 210, a communications interface 220, and memory 230 interconnected to one another using an interconnect 240. In other examples, the network traffic management apparatus can include other types or numbers of elements in other configurations.

The processor(s) 210 of the network traffic management apparatus 110 may execute programmed instructions stored in the memory of the network traffic management apparatus 110 for any number of functions described and illustrated herein. As one example, the processor(s) 210 of the network traffic management apparatus 110 can include one or more central processing units (CPUs) or general-purpose processors with one or more processing cores. As another example, the processor(s) 210 of the network traffic management apparatus 110 can include configurable logic, such as the programmable hardware of a field-programmable gate array (FPGA).

The memory 230 of the network traffic management apparatus 110 stores these programmed instructions for one or more aspects of the present technology as described and illustrated herein, although some or all of the programmed instructions could be stored elsewhere. A variety of different types of memory storage devices, such as random access memory (RAM), read only memory (ROM), hard disk, solid state drives, flash memory, or other computer readable medium which is read from and written to by a magnetic, optical, or other reading and writing system that is coupled to the processor(s), can be used for the memory.

Accordingly, the memory 230 of the network traffic management apparatus 110 can store one or more modules that can include computer executable instructions that, when executed by the network traffic management apparatus 110, cause the network traffic management apparatus 110 to perform actions, such as to transmit, receive, or otherwise process messages, for example, and to perform other actions described and illustrated below with reference to FIGS. 2-4. The modules can be implemented as components of other modules. Further, the modules can be implemented as applications, operating system extensions, plugins, or the like.

Even further, the modules may be operative in a cloud-based computing environment. The modules can be executed within or as virtual machine(s) or virtual server(s) that may be managed in a cloud-based computing environment. Also, the modules, and even the network traffic management apparatus 110 itself, may be located in virtual server(s) running in a cloud-based computing environment rather than being tied to one or more specific physical network computing devices. Also, the modules may be running in one or more virtual machines (VMs) executing on the network traffic management apparatus 110. Additionally, in one or more examples of this technology, virtual machine(s) running on the network traffic management apparatus may be managed or supervised by a hypervisor.

In this particular example, the memory of the network traffic management apparatus 110 can include a control segment (CS) 232 and a flow table 234, although the memory can include other policies, modules, databases, or applications. As one example, the CS 232 can process network traffic in software using the flow table 234. In one example, the CS 232 manages network address translation (NAT) to facilitate the full proxying of connections by the network traffic management apparatus 110 between the client devices 140A-M and the server devices 120A-N.

In this example, the network traffic management apparatus 110 terminates connections with both the client devices 140A-M and the server devices 120A-N. The flow table 234 includes source and destination Internet Protocol (IP) and port information that allow network traffic to be directed appropriately. In particular, the flow table 234 can include entries that define NAT actions to be taken based on a comparison of header information in a received network packet so that the network packet is routed to the appropriate destination. In other examples, the actions in the entries of the flow table 234 can include dropping (e.g., blacklisting), allowing (e.g., whitelisting), or metering (e.g., graylisting) network traffic without performing any additional security analysis. Other types of actions can be embodied in the entries of the flow table 234 in other examples.

Referring back to FIGS. 1-2, the communication interface 220 of the network traffic management apparatus 110 operatively couples and communicates between the network traffic management apparatus 110, server devices 120A-N, and client devices 140A-M, which are coupled together at least in part by the communication network(s) 130A-B, although other types or numbers of communication networks or systems with other types or numbers of connections or configurations to other devices or elements can also be used. In this particular example, the communication interface 220 can include a data flow segment (DFS) 222, a flow reservation system (FRS) 224, a flow cache 226, and a content-addressable memory (CAM) 228.

By way of example only, the communication network(s) 130A-B can include local area network(s) (LAN(s)) or wide area network(s) (WAN(s)), and can use TCP/IP over Ethernet and industry-standard protocols, although other types or numbers of protocols or communication networks can be used. The communication network(s) 130A-B in this example can employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like.

As one example, the DFS 222 can process network traffic similarly to the CS 232, but in hardware. Accordingly, the DFS 222 can be implemented in configurable hardware logic (e.g., field programmable gate arrays). The DFS 222 can provide hardware offloading such that network traffic for certain flows is processed in hardware with improved performance (e.g., reduced latency and higher throughput as compared to processing in software). The DFS 222 can determine whether to process network traffic in hardware based on whether there is an entry for the network traffic in the flow cache 226.

Accordingly, the flow cache 226 can store a portion of the flow table 234 that is associated with network traffic for which hardware offloading has been implemented. If the DFS 222 determines that an entry does not exist in the flow cache 226 for a received network packet, then the DFS 222 forwards the network packet to the CS 232 for processing in software. Conversely, if the CS 232 determines that hardware offloading should be implemented for a flow associated with a received network packet, the CS 232 can instruct the DFS 222 to insert an entry for the flow, which is replicated from the flow table 234, into the flow cache 226.

However, if the CS 232 determines that a collision has occurred in the flow cache 226 (i.e. the flow cache 226 is already storing an entry at a location indexed by a hash value obtained using a flow signature for a network packet), the FRS 224 is consulted to identify an available location in the flow cache 226 for the entry. The FRS 224 in this example operates as a background process that continuously or periodically scans the flow cache 226 to collect unused flow cache locations to be reserved for use upon detection of a collision. Optionally, the FRS 224 is implemented in configurable hardware logic and the reserved locations are limited in number and obtained at random locations (e.g., non-contiguous locations) in the flow cache 226, although the FRS 224 can be implemented in other ways.

Accordingly, the FRS 224 provides a reserved, available location in the flow cache 226 to the CS 232 upon detection of a collision in the flow cache 226. The CS 232 then instructs the CAM 228 to insert an entry that includes information extracted from a received network packet (e.g., a flow signature or portion thereof) correlated with a pointer to the location in the flow cache 226 provided by the FRS 224. Accordingly, the CAM 228, which is also referred to as associative memory, effectively stores a table that can be searched relatively quickly to index into the flow cache for flows that have resulted in a flow cache collision, as described and illustrated in more detail later.

In some examples, the CAM 228 can be implemented as a binary CAM or a ternary CAM (TCAM), and other types of data structures and memory can also be used. Binary CAMs search for an exact match for every bit of the search data. A bit, short for binary digit, is the smallest unit of information used in a digital system (e.g., a computer system) and can hold one of two possible values (e.g., zero or one). TCAMs can mask off bits in the stored data so that multiple values used as a search input can match on stored data at a given address. For example, the masked value 1XX011 can match to the values 100011, 101011, 110011, and 111011, where an X represents a masked bit.

In examples in which the CAM 228 is a TCAM, search flexibility can be provided such that a result can be returned for only a portion of a flow signature, for example, also as described and illustrated in more detail later. Upon processing a subsequent network packet, the DFS 222 can consult the CAM 228 to determine whether there is a hit and, if there is a hit, extract a pointer to a location in the flow cache 226 that can be used to perform an action on the network packet. Therefore, hardware offloading can be provided for flows that resulted in a flow cache collision more efficiently using a CAM 228 and without requiring sequential lookups along a chain of hash collided entries associated with a flow cache location, or other additional processing. It should be noted that the CAM 228 can be programmed so that a given network packet can match (hit) multiple entries within the CAM 228. For example, a general rule can be specified for a class of flows and specific rules can be specified for specific flows. In the case of multiple hits for a network packet, the CAM 228 will return a result corresponding to the more specific match rather than the more general match. By programming a general or default rule, the CAM 228 entries can be conserved as many different network flows can be serviced using a single or a few CAM entries. For example, one or a small number of entries can be used to create a rule that performs wildcard virtual syn-cookie protection in hardware.

While the network traffic management apparatus 110 is illustrated in this example as including a single device, the network traffic management apparatus 110 in other examples can include a plurality of devices or blades each having one or more processors (each processor with one or more processing cores) that implement one or more steps of this technology. In these examples, one or more of the devices can have a dedicated communication interface or memory. Alternatively, one or more of the devices can utilize the memory, communication interface, or other hardware or software components of one or more other devices included in the network traffic management apparatus.

Additionally, one or more of the devices that together comprise the network traffic management apparatus 110 in other examples can be standalone devices or integrated with one or more other devices or apparatuses, such as one or more of the server devices, for example. Moreover, one or more of the devices of the network traffic management apparatus in these examples can be in a same or a different communication network including one or more public, private, or cloud networks, for example.

Each of the server devices 120A-N of the network traffic management system 100 in this example includes processor(s), a memory, and a communication interface, which are coupled together by a bus or other communication link, although other numbers or types of components could be used. The server devices 120A-N in this example can include application servers or database servers, for example, although other types of server devices can also be included in the network traffic management system 100.

Accordingly, in some examples, one or more of the server devices 120A-N process login and other requests received from the client devices via the communication network(s) according to the HTTP-based application RFC protocol, for example. A web application may be operating on one or more of the server devices and transmitting data (e.g., files or web pages) to the client devices (e.g., via the network traffic management apparatus) in response to requests from the client devices. The server devices 120A-N may be hardware or software or may represent a system with multiple servers in a pool, which may include internal or external networks.

Although each of the server devices 120A-N are illustrated as single devices, one or more actions of each of the server devices 120A-N may be distributed across one or more distinct network computing devices that together comprise one or more of the server devices 120A-N. Moreover, the server devices 120A-N are not limited to a particular configuration. Thus, the server devices 120A-N may contain network computing devices that operate using a master/slave approach, whereby one of the network computing devices of the server devices operate to manage or otherwise coordinate operations of the other network computing devices. The server devices 120A-N may operate as a plurality of network computing devices within a cluster architecture, a peer-to peer architecture, virtual machines, or within a cloud architecture, for example.

Thus, the technology disclosed herein is not to be construed as being limited to a single environment and other configurations and architectures are also envisaged. For example, one or more of the server devices 120A-N can operate within the network traffic management apparatus 110 itself rather than as a stand-alone server device communicating with the network traffic management apparatus 110 via communication network(s) 130A-B. In this example, the one or more of the server devices 120A-N operate within the memory of the network traffic management apparatus.

The client devices 140A-M of the network traffic management system 100 in this example include any type of computing device that can exchange network data, such as mobile, desktop, laptop, or tablet computing devices, virtual machines (including cloud-based computers), or the like. Each of the client devices 140A-M in this example includes a processor, a memory, and a communication interface, which are coupled together by a bus or other communication link (not illustrated), although other numbers or types of components could also be used.

The client devices 140A-M may run interface applications, such as standard web browsers or standalone client applications, which may provide an interface to make requests for, and receive content stored on, one or more of the server devices via the communication network(s). The client devices 140A-M may further include a display device, such as a display screen or touchscreen, or an input device, such as a keyboard for example (not illustrated).

Although the exemplary network traffic management system 100 with the network traffic management apparatus 110, server devices 120A-N, client devices 140A-M, and communication network(s) 130A-B are described and illustrated herein, other types or numbers of systems, devices, components, or elements in other topologies can be used. It is to be understood that the systems of the examples described herein are for exemplary purposes, as many variations of the specific hardware and software used to implement the examples are possible, as will be appreciated by those skilled in the relevant art(s).

One or more of the components depicted in the network traffic management system 100, such as the network traffic management apparatus 110, server devices 120A-N, or client devices 140A-M, for example, may be configured to operate as virtual instances on the same physical machine. In other words, one or more of the network traffic management apparatus 110, server devices 120A-N, or client devices 140A-M may operate on the same physical device rather than as separate devices communicating through communication network(s). Additionally, there may be more or fewer network traffic management apparatus 110, server devices 120A-N, or client devices 140A-M than illustrated in FIG. 1.

In addition, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only, wireless traffic networks, cellular traffic networks, Packet Data Networks (PDNs), the Internet, intranets, and combinations thereof.

The examples also may be embodied as one or more non-transitory computer readable media having instructions stored thereon, such as in the memory of the network traffic management apparatus 110, for one or more aspects of the present technology, as described and illustrated by way of the examples herein. The instructions in some examples include executable code that, when executed by one or more processors, such as the processor(s) of the network traffic management apparatus 110, cause the processors to carry out steps necessary to implement the methods of the examples of this technology that are described and illustrated herein.

### Example Methods for Managing Network Traffic Flows

An example method 300 of processing network packets will now be described with reference to FIGS. 1-3. As one example, the method 300 can be used to potentially decrease a latency of processing network packets that are offloaded to a hardware accelerator. For example, the method 300 can be implemented by a network traffic management apparatus 110, such as described above in reference to FIGS. 1-2. For example, computer-executable instructions for carrying out the method 300 can be stored in a computer-readable memory of the network traffic management apparatus 110, and the instructions can be executed by a processor of the network traffic management apparatus 110 to perform the method 300.

At 301, the network traffic management apparatus of the network traffic management system receives a network packet at the DFS. The network packet could be received from one of the client devices or one of the server devices, and could be destined for one of the server devices or one of the client devices, respectively. The network packet can be received via the communication network(s) and a port associated with the communication interface, for example.

At 302, the DFS of the network traffic management apparatus determines whether the network packet is terminating a communications connection. For example, a transmission control protocol (TCP) FIN packet can be used to indicate the termination of a connection. While TCP is used in this example, other types of protocols and/or connection termination messages, can also be used in other examples. If the DFS determines in step 302 that a connection termination message has not been received, then the No branch is taken to 304. If the DFS determines that a connection termination message has been received then the network traffic management apparatus proceeds to 310.

At 304, the DFS of the network traffic management apparatus extracts a flow signature from the network packet. The flow signature can include a tuple or collection of information generated from header(s) of the network packet. Exemplary header information that can be used as a flow signature includes a virtual local area network (VLAN), destination IP address, source IP address, destination port, or source port, for example, and other information can also be used in the flow signature in other examples.

At 306, the DFS of the network traffic management apparatus determines whether there is a hit in the CAM based on the extracted flow signature or a portion thereof. In examples, in which the CAM is a binary CAM, the entirety of the flow signature is searched and matched. Alternatively, in examples in which the CAM is a TCAM, only a portion of the flow signature is searched. For example, the DFS can search the TCAM based on a profile of only the VLAN, destination IP address, and destination port, if hardware offloading has been implemented for all flows that match that profile. If the DFS determines that there is not a hit in the CAM, then the No branch is taken to 308. However, if the DFS determines that there is a hit in the CAM, then the Yes branch is taken to 312.

At 308, the network traffic management apparatus determines whether there is a hit in the flow cache for the flow associated with the network packet. In this example, the DFS generates a hash value by applying a hash function to the flow signature extracted at 304 in order to index into the flow cache. Accordingly, while the CAM is data addressed, the flow cache is indexed based on a hash value in this example. If the DFS determines that there is not a hit in the flow cache, then the No branch is taken from step 308 and the network traffic management apparatus proceeds to 310. If the DFS determines that there is a hit in the flow cache at 308, then the Yes branch is taken and the network traffic management apparatus proceeds to 314.

At 310, the DFS of the network traffic management apparatus sends the packet to the CS for processing. If there is not a hit in the flow cache, then the network traffic management apparatus has not implemented hardware offloading for the flow, and the network packets associated with the flow are processed in software by the CS. In some examples, the DFS can forward the network packet to the CS using direct memory access (DMA), although other methods for communicating between the DFS and the CS can also be used in other examples.

At 312, the DFS of the network traffic management apparatus obtains a flow cache pointer from a CAM entry that resulted from the search based on a match of the flow signature, or a portion thereof. The pointer in the CAM entry identified a particular location in the flow cache. Accordingly, a previous attempt to implement hardware offloading for the flow resulted in a collision in the flow cache, as described and illustrated in more detail later. As a result, an available location in the flow cache was identified from reserved locations, and the pointer to the available location was inserted into the entry of the CAM that results in the hit in step 306. Subsequent to obtaining the flow cache pointer, the network traffic management apparatus proceeds to 314.

At 314, the network traffic management apparatus performs an action on the network packet that is identified in a flow data structure in a flow cache entry. The flow cache entry when the Yes branch is taken from 308 is the entry that resulted in the hit in the flow cache. In examples in which step 308 is not performed because there was a CAM hit, then the entry is pointed to by the flow cache pointer obtained at 312. In these examples, an entry for the flow can be in the flow cache, but is indexed based on the flow cache pointer and not a hash value of the flow signature for the network packet since the hash value resulted in a collision.

In some examples, the action performed at 314 can include transforming the network packet, generating a synchronization cookie, dropping the network packet, or allowing the network packet. Accordingly, the action can be implicitly defined (e.g., based on NAT information) or explicitly defined (e.g., allow or drop the network packet), and other types of actions can also be performed at 314 and offloaded to hardware to improve performance.

Subsequent to performing the action at 314 or sending the network packet to the CS in step 310, the network traffic management apparatus can proceed back to 300 and receive another network packet. In other examples, one or more of 300-314 can be performed in parallel (e.g., pipelined) for any number of network packets. Additionally, one or more of 300-314 can be performed in a different order in other examples.

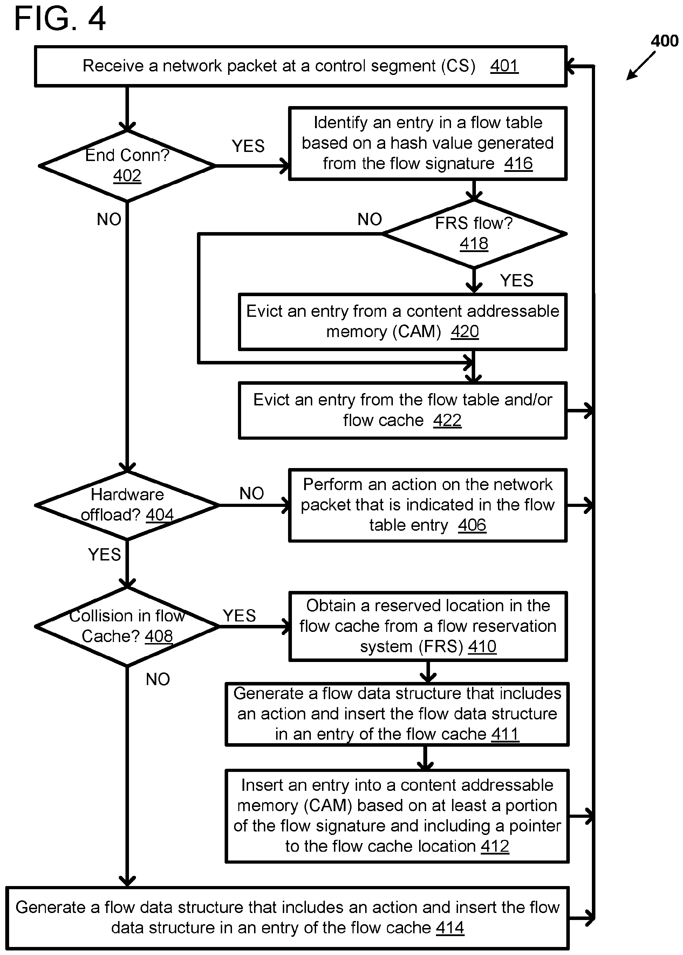

Referring more specifically to FIG. 4, an example of a method 400 of processing network traffic in software with hardware offloading for particular flows is illustrated. As one example, the method 400 can be used to potentially decrease a latency of processing network packets that are offloaded to a hardware accelerator. For example, the method 400 can be implemented by a network traffic management apparatus 110, such as described above in reference to FIGS. 1-3. For example, computer-executable instructions for carrying out the method 400 can be stored in a computer-readable memory of the network traffic management apparatus 110, and the instructions can be executed by a processor of the network traffic management apparatus 110 to perform the method 400.

At 401, the network traffic management apparatus of the network traffic management system receives a network packet at the CS. The network packet could have been forwarded to the CS via DMA from the DFS at 310, for example.

At 402, the CS of the network traffic management apparatus determines whether the network packet is being used to terminate a communications connection. For example, a TCP FIN network packet can be used as a connection termination message. In this example, connection termination messages are handled by the CS in software, although they could be handled in hardware (e.g., by the DFS) in other examples. If the CS determines that the network packet is not a connection termination message, then the No branch is taken to 404.

At 404, the CS of the network traffic management apparatus determines whether hardware offloading should be implemented for the flow associated with the network packet. The determination in step 404 can be based on a stored policy and/or a dynamic analysis of a current condition, such as a network attack condition that might be mitigated more quickly by hardware offloading the processing and/or blocking of malicious network traffic, for example. If the CS determines that hardware offloading is not to be implemented for the flow, then the No branch is taken to 406.

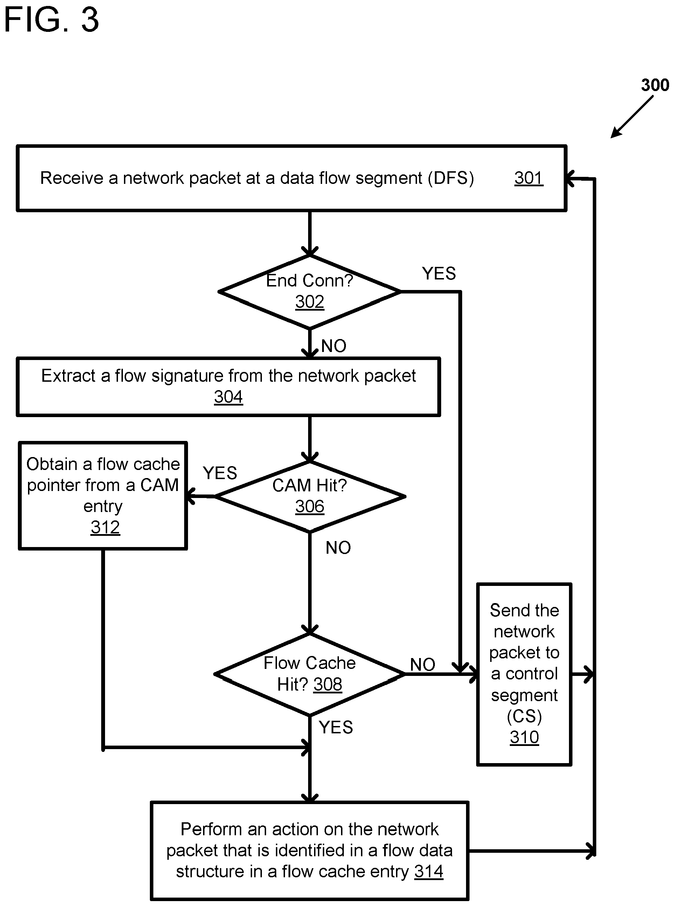

At 406, the CS of the network traffic management apparatus performs an action on the network packet that is indicated in a flow table entry for the flow associated with the network packet. To identify the flow table entry, the CS can obtain a flow signature from the network packet (e.g., from header information) and generate a hash value by applying a hash function to the flow signature. The action can be the same or different then the actions described and illustrated earlier with reference to 314 of FIG. 3, for example. However, if the CS determines at 404 that hardware offloading should be implemented for the flow, then the Yes branch is taken to 408.

At 408, the CS of the network traffic management apparatus determines whether there is a collision in the flow cache. To determine whether there is a collision, the CS can generate a hash value from the flow signature for the network packet, which can be used as an index to determine whether the corresponding location is available in the flow cache. Since the flow cache merely stores entries of the flow table that are associated with flows for which hardware offloading is implemented, the CS can query the flow table to determine whether there is a collision in the flow cache at 408. If the CS determines that there is a collision in the flow cache at 408, then the Yes branch is taken to 410.

At 410, the CS of the network traffic management apparatus obtains a reserved location in the flow cache from the FRS. The FRS maintains a set of reserved locations in the flow cache that are available for use upon detection of a collision, as explained in more detail earlier. At 411, the CS of the network traffic management apparatus generates a flow data structure that includes an action and inserts the flow data structure into an entry of the flow cache.

At 412, the CS of the network traffic management apparatus inserts an entry into the CAM that is indexed or data addressable based on at least a portion of the flow signature for the network packet. The inserted entry includes a pointer to the reserved location in the flow cache obtained at 410. By inserting (411) the flow data structure into the entry of the flow cache before inserting the entry into the CAM, the CAM entry will be ensured to reference valid information in the flow cache. Accordingly, subsequent lookups by the DFS for the flow that resulted in a flow cache collision can be performed using an additional CAM search to index into the flow cache and obtain an appropriate entry, as described and illustrated in more detail earlier with reference to 306, 312, and 314 of FIG. 3. In other examples, the CAM entry can include an action to be taken (e.g., an action associated with a whitelist or blacklist or another relatively less complex action than may be defined in a corresponding flow cache entry) instead of a pointer to a location in the flow cache. In these examples, indexing into the flow cache can be avoided altogether in the processing of packets associated with the flow that resulted in the CAM search. Subsequent to instructing the CAM to insert the entry at 412, or of the CS determines that there is not a collision in the flow cache and the No branch is taken from 408, then the network traffic management apparatus proceeds to 414.

At 414, the CS of the network traffic management apparatus generates a flow data structure that includes an action and inserts the flow data structure into an entry of the flow cache. The CS then performs the action on the network packet, in a manner described and illustrated earlier with reference to 406. The CS can instruct the flow cache directly to insert the entry, or indirectly via the DFS. The flow data structure in this example is inserted into the flow cache at the reserved location directly, if the reserved location was obtained in step 410 in response to a flow cache collision, or at a location corresponding to a hash value generated from the flow signature indirectly via the DFS, if the No branch was taken from step 408 and there was not a flow cache collision. In examples in which the flow is a new flow, the CS also can insert a corresponding entry into the flow table. Referring back to 402, if the CS determines that the network packet received at 401 terminates a communications connection (e.g., it is a TCP FIN packet), then the Yes branch is taken to 416.

At 416, the CS of the network traffic management apparatus identifies an entry in the flow table based on a hash value generated from the application of a hash function to the flow signature. In this example, the CS can handle all connection termination messages and, accordingly, the termination message could have been forwarded by the DFS, as described and illustrated in more detail earlier with reference to 310 of FIG. 3, although the termination message can be handled and/or received by the CS in other ways in other examples.

At 418, the CS of the network traffic management apparatus determines whether the flow associated with the identified entry is an FRS flow. In other words, the CS determines at 418 whether hardware offloading is implemented for the flow and, if so, there was a collision when the CS attempted to insert the entry into the flow cache. The determination at 418 can be made based on a lookup in the CAM using the flow signature, or a portion thereof, or based on an indication in the corresponding entry in the flow table (e.g., as inserted with the flow data structure at 414), for example, and other methods for determining whether the flow is an FRS flow can also be used. If the CS determines that the flow is an FRS flow, then the Yes branch is taken to 420.

At 420, the CS of the network traffic management apparatus evicts the entry from the CAM that corresponds to the flow. The entry can be identified based on a search of the CAM using the flow signature, or a portion thereof. The eviction can be based on an instruction from the CS to the DFS, or directly to the CAM, for example. However, if the CS determines at 418 that the flow is not an FRS flow, then the No branch is taken to 422.

At 422, the CS of the network traffic management apparatus evicts an entry for the flow from the flow table after performing the action on the termination message that is specified in the flow table entry. In some examples, the entry is marked for eviction by the CS and lazily evicted or replaced with current data, for example. The CS also evicts the corresponding entry from the flow cache if hardware offloading is implemented for the flow. The CS can perform a lookup in the flow cache using the hash value generated at 416 to determine whether hardware offloading has been implemented, for example. The eviction from the flow cache can be initiated by the CS directly or via instruction from the CS to the DFS.

Subsequent to evicting the entry from the flow table and/or the flow cache at 422, or performing the action directly at 406, or generating and inserting the flow data structure at 414, the network traffic management apparatus proceeds back to 401 in this example. In other examples, one or more of 401-414 can be performed for any number of different network packets. Additionally, one or more of 401-422 can be performed in a different order in other examples. In one particular example, 414 can be performed prior to 412 when the Y branch is taken from 408 to account for a race condition with respect to the flow cache, and other examples are also possible.

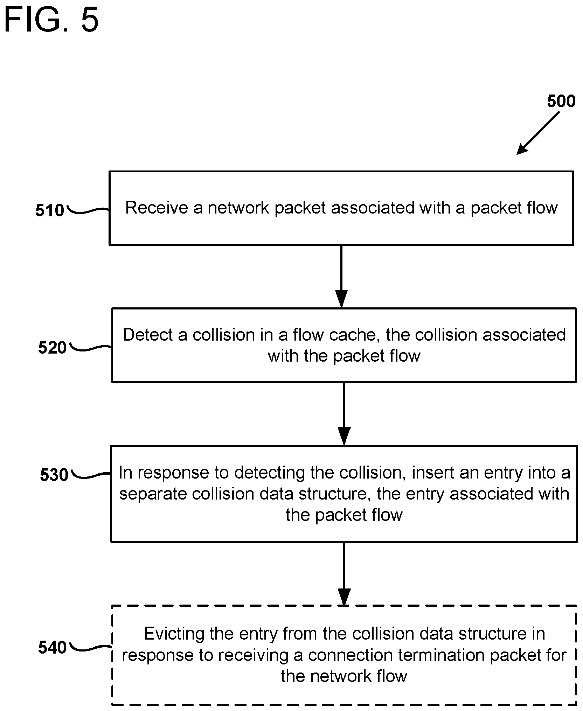

FIG. 5 is a flowchart of an example method 500 for processing network packets, such as at an intermediary computing device. As one example, the method 500 can be used to potentially decrease a latency of processing network packets that are offloaded to a hardware accelerator. For example, the method 500 can be implemented by a network traffic management apparatus 110, such as described above in reference to FIGS. 1-4. For example, computer-executable instructions for carrying out the method 500 can be stored in a computer-readable memory of the network traffic management apparatus 110, and the instructions can be executed by a processor of the network traffic management apparatus 110 to perform the method 500.

At 510, a network packet associated with a packet flow can be received. A flow signature can be extracted for the network packet using packet fields of the network packet. The flow signature can include packet fields that correspond to the packet flow. For example, the flow signature can include one or more of a source address (e.g., a source IP address), a destination address (e.g., a destination IP address), a virtual local area network (VLAN) identifier, a destination port, or a source port. A hash value can be generated from the flow signature. The hash value can be used to identify network packets of the packet flow.

At 520, a collision in a flow cache can be detected. For example, the flow cache can be indexed using the hash values generated from the flow signatures of the received network packets. When there are no collisions, information related to the packet flow can be stored in an entry of the flow cache that is located at an address corresponding to the hash value generated from the flow signature of the network packet. When the signature of only one packet flow hashes to a given hash value, the entry in the flow cache that is indexed by the given hash value will be collision-free. However, when the signatures of different packet flows hash to the same hash value, collisions in the flow cache can occur. Accordingly, collisions can be detected when a network packet associated with a packet flow is received. Specifically, a collision can be detected in the flow cache when the hash value generated from a flow signature of the received network packet matches the hash value of an allocated entry of the flow cache. In other words, a collision can occur when the hash value of the flow signature of the network packet matches the hash value of a different flow signature of a previously received network packet.

At 530, in response to detecting the collision, an entry can be inserted into a separate collision data structure that is different from the flow cache, where the entry is associated with the packet flow. For example, the collision data structure can be a CAM. The entry can be indexed based on at least a portion of the flow signature. For example, the CAM can be a TCAM indexed by one or more of a VLAN identifier, a destination address, a source address, a destination port, or a source port. As another example, the CAM can be a binary CAM indexed by one or more of a VLAN identifier, a destination address, a source address, a destination port, or a source port. The entry can include a pointer to a free location in the flow cache. Another entry can be inserted into the flow cache at the free location. The free location can be selected from a pool of free entries. As one example, the free locations can be selected from a reserved space of the flow cache (such as an area following the entries matching received packet flows). As another example, the free locations can be selected from locations of the flow cache that are not currently being used for received packet flows. In contrast, when a received network packet does not cause a collision in the flow cache, an entry in the flow cache can be added at an address based on the hash value generated from the flow signature extracted from the network packet. The entry in the flow cache can include an action to be performed in hardware on network packets associated with the flow. For example, the action can include performing a transformation on the network packet, generating a synchronization cookie, dropping the network packet, or allowing the network packet.

At optional 540, the entry in the collision data structure can be evicted (also referred to as being freed) in response to receiving a connection termination packet for the network flow. For example, the connection termination packet can be a TCP FIN packet for the network flow. The connection termination packet can indicate that the communication session for the network flow is being closed and so information about the network flow can be cleared from the data structures that are used to control the network flow. An entry or entries in the flow cache that are referenced by the entry in the collision data structure can also be freed. Freeing the entries can include changing a status bit of the entry from valid to invalid and/or adding the location of the entry to a free list.

With this technology, the latency associated with hardware offloading may be significantly improved (e.g., a peak latency can be reduced and/or a jitter of the latency can be reduced) for flows that result in a collision in a flow cache. For example, control information associated with the colliding flows can be stored in a collision data structure separate from the flow cache so that the information can be obtained faster than following a chained data structure in the flow cache. For example, the collision data structure can be a relatively fast CAM which can be used to reference an index location of the flow cache that might otherwise be empty in the flow cache. For example, the flow cache can be a relatively sparse data structure, and the CAM can be used to reference entries of the flow cache that would go unused if the CAM were not used. Accordingly, increased performance (e.g., with respect to bounded latency or throughput) can be provided by reducing or eliminating chained data structures so that an increased number or percentage of flows can be processed at a relatively low latency. Additionally, more network traffic can potentially be processed during a network attack condition.

### Additional Examples

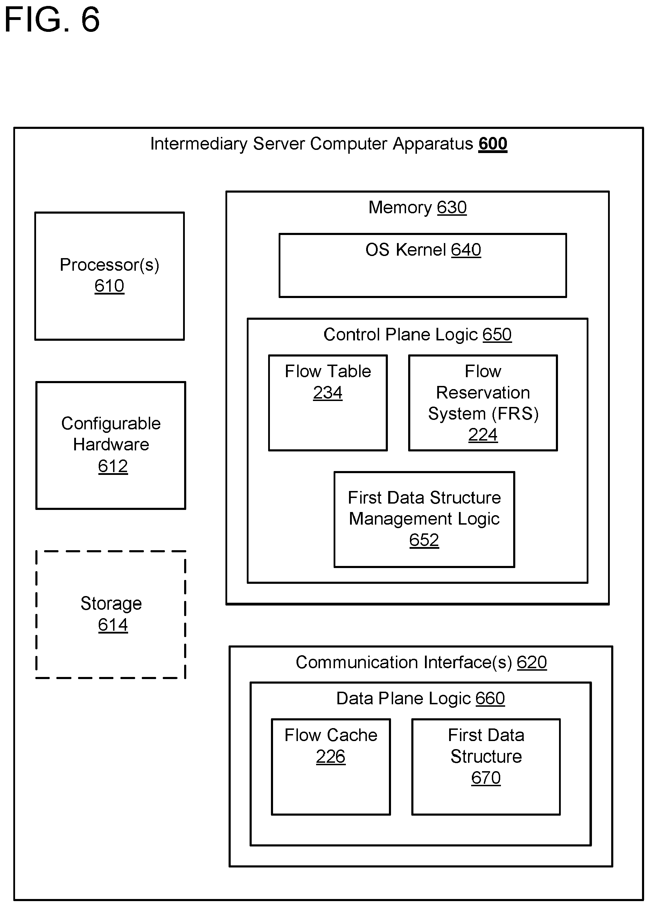

FIG. 6 is a block diagram of an example intermediary server computer apparatus 600. For example, the intermediary server computer apparatus 600 can be a load balancer, an application delivery controller, a network traffic management system (e.g., such as the network traffic management apparatus 110 of FIG. 1), or another component configured to be in a communication path between a client and a server of a client-server architecture. The intermediary server computer apparatus 600 can be implemented using a computing environment as described in more detail with reference to FIG. 11.

The intermediary server computer apparatus 600 can include one or more processor(s) 610, configurable hardware 612, one or more communication interface(s) 620, and memory 630. The intermediary server computer apparatus 600 can include optional storage 614, such as a hard disk drive or a flash drive. The processor 610, configurable hardware 612, storage 614, communication interface 620, and the memory 630 can be coupled together with an interconnect (not shown) so that the components of the computer apparatus 600 can communicate with each other using the interconnect. The communication interface 620 can be used to send and receive communications (e.g., network packets) with other computing devices, such as a client and a server. The processor 610 can be used to execute computer-executable instructions that are stored in the memory 630 and/or storage resources 614. The computer-executable instructions can be organized into software routines (also referred to as modules or components) comprising executable code to perform various computing tasks. The memory 630 can also include structured and/or unstructured data that is used by the software routines to perform the computing tasks.

It should be noted that while FIG. 6 illustrates one organization of routines, other organizations are possible. For example, the illustrated routines can be sub-divided into smaller routines and/or combined into larger routines. It should be appreciated by one of ordinary skill in the art having the benefit of the present disclosure, that functions of software routines executed by a processor can also be performed using programmable and/or special-purpose hardware (e.g., configurable hardware 612), such as by using the logic circuitry within a field-programmable gate-array (FPGA) or an application-specific integrated circuit (ASIC). Similarly, functions performed using programmable and/or special-purpose hardware can be performed by software routines executed by a processor, although functions performed by software routines are generally slower than functions performed by programmable and/or special-purpose hardware.

The operating system (OS) kernel 640 can include different software routines for managing different aspects of the execution of programs and for interfacing with the hardware of the intermediary server computer apparatus 600. For example, the OS kernel 640 can manage the loading and removal of data, software applications, and other routines into the memory 630 of the computer apparatus 600; the OS kernel 640 can manage storage resources (e.g., storage 614) of the computer apparatus 600; the OS kernel 640 can manage processes and/or threads executing on the processor 610; the OS kernel 640 can manage power states of the computer apparatus 600; the OS kernel 640 can provide an interface for applications and other routines to send and receive communications (e.g., network packets) using the communications interface 620; and the OS kernel 640 can enable inter-process communication between different routines executing on the computer apparatus 600.

Network traffic can be managed using an architecture including control plane logic 650 and data plane logic 660. As illustrated, the control plane logic can be implemented as software routines stored in the memory 630 and executed by the processor 610. The data plane logic 660 can be integrated with the communication interface 620 and can include routines that are programmed to execute in special-purpose and/or configurable hardware (e.g., configurable hardware 612). For example, the special-purpose and/or configurable hardware can be configured/programmed as one or more hardware accelerators. The data plane logic 660 can determine whether a network packet is to be processed by the data plane logic 660 or whether additional processing of the network packet is to be performed by the control plane logic 650. As one example, network packets processed by the data plane logic 660 can be processed using special-purpose and/or configurable hardware without interaction by the processor 610. Network packets processed by the control plane logic 650 can be processed using software routines executing by the processor 610.

The first data structure 670 can be used to identify fast flows that are to be processed using hardware of the data plane. As one example, the first data structure 670 can include an associative memory, such as a binary or ternary CAM. As another example, the first data structure 670 can emulate search capabilities of a binary or ternary CAM. Accordingly, a search of the first data structure 670 can include performing a bit-by-bit comparison of the search data and data that is present in the first data structure 670. An entry of the first data structure 670 can include various data, such as search data for identifying a network packet flow, control data for interpreting information within the entry, an index or location of the flow cache 226, and/or data that can be used to generate an index or location of the flow cache 226. For example, one value of a control field can indicate that the entry holds a direct reference to the flow cache 226. As another example, a different value of the control field can indicate that the entry holds data that is to be used to generate a reference to the flow cache 226.

The flow cache 226 can be used to identify network packet flows that are to be processed using hardware of the data plane. As one example, the flow cache 226 can be arranged as a table of entries, where each entry can be accessed using an index or location of the entry. Each entry of the flow cache 226 can include various data for a given network packet flow, such as identifying information for the network packet flow, and one or more operations to be performed by the data plane for a network packet of the network packet flow.

The data plane logic 660 can determine how a network packet is to be processed using the first data structure 670 and the flow cache 226. When a new network packet is received by the data plane, a network flow signature can be generated using packet fields of the received network packet. The network flow signature can be used to search the first data structure 670 and the flow cache 226 to determine whether the received network packet will be processed by the control plane or the data plane. When there are no entries in the first data structure 670 or the flow cache 226 that correspond to the network packet flow of the received packet, and the received packet will be processed by the control plane logic 650. The first data structure 670 can be searched prior to accessing the flow cache 226. Specifically, all or a portion of the network flow signature can be used as data to be searched within the first data structure 670.

If the search data is present in the first data structure 670, then additional data for the network packet flow will be present in the flow cache 226. For example, an output of the search of the first data structure 670 can return an index or location of the flow cache 226. As another example, an output of the search of the first data structure 670 can return data that can be used to generate an index or location of the flow cache 226. The location of the flow cache 226 can be the location of an entry corresponding to the network packet flow. The operations to perform (by the data plane) on the network packets of the network packet flow can be obtained from the entry in the flow cache 226. In this context, the flow cache 226 is used as a table having entries that can be directly accessed using indices of the respective injuries.

If the search data is not present in the first data structure 670, then a search can be performed of the flow cache 226. As one example, the network flow signature can be hashed, and the hash value can be used to index the flow cache 226. If an entry is present at the index of the flow cache 226, the entry may correspond to the network packet flow of the received network packet. In order to determine whether there is a match, a full comparison between the network flow signature and identifying information stored within the entry can be performed. If the entry corresponds to the network packet flow of the received network packet, operations to perform (by the data plane) on the network packet can be obtained from the entry. In this context, the flow cache 226 is used as a hash table having entries that are accessed by hashing the network flow signature.

The control plane logic 650 can be used to process network packets that are not processed by the data plane and to manage the data structures that are used to differentiate where a given packet will be processed (e.g., the control plane or the data plane). The flow table 234 can include information regarding how to process any type of packet that transits the intermediary server computer apparatus 600. For example, the flow table 234 can include a superset of information that includes the information that is stored in the flow cache 226 and in the first data structure 670. The flow reservation system 224 can track the entries that are used in the flow cache 226 and/or the entries that are not used (e.g., the free entries) and the flow cache 226. The free entries can be used for the fast flows that are referenced by the first data structure 670.

The control plane logic 650 can be used to differentiate where a given packet will be processed and can generate the appropriate entries for the data structures (224, 226, 670) so that packets of the same network packet flow will be processed similarly. For example, the control plane logic 650 can determine that a network packet flow is a fast flow packet flow, a flow to be processed by the data plane but as a colliding flow in the flow cache 226, or a flow that is to be processed by the control plane. The control plane logic 650 can generate an entry in the flow table 234 for network packet flows that are processed by the control plane. The entry can include operations to process packets of the network packet flow.

The control plane logic 650 can generate entries in the first data structure 670 and the flow cache 226 for fast network packet flows that are processed by the data plane. A fast flow packet is processed by the data plane and has a corresponding entry in the first data structure 670. Fast flow packets can include particular classes of packets and/or packets that may create duplicative entries in the flow cache 226. For example, a duplicative entry can be created when the network packet flow signature includes bits that may vary, but do not affect the processing of packets of the flow. For example, when the network packet flow signature includes an IP address, the lower address bits of a subnet may vary. However, network packets from the different addresses within the subnet may all be processed the same. If the hash of the signature were used, then unique entries in a hash table (e.g. the flow cache 226) could be allocated for all the different addresses within the subnet. A single entry of the first data structure 670 can be used to identify the network packets from different subnet addresses of the same network packet flow. For example, the subnet address bits of a network packet flow can be masked as don't cares in the data identifying the network packet flow. The entry in the first data structure 670 can include the data within the network flow signature that uniquely identifies the fast flow. The control plane logic 650 can use the flow reservation system 224 to find a free entry in the flow cache 226 (e.g., using the flow reservation system) for a fast flow. The location of the free entry in the flow cache 226 can be added to the entry in the first data structure 670.

The control plane logic 650 can generate entries in the first data structure 670 and the flow cache 226 for network packet flows that are processed by the data plane and that have network packet flow signatures that hash to the same hash value (e.g., the different network packet flows collide in the flow cache 226). The control plane logic 650 can detect that one network packet flow collides with another network packet flow in the flow cache 226. The entry in the first data structure 670 can include the data within the colliding network flow signature that uniquely identifies the colliding flow. The control plane logic 650 can use the flow reservation system 224 to find a free entry in the flow cache 226 (e.g., using the flow reservation system) for the colliding flow. The location of the free entry in the flow cache 226 can be added to the entry in the first data structure 670. The first data structure management logic 652 can be used by the control plane logic 650 to manage the entries of the first data structure 670. For example, the first data structure management logic 652 can select locations within the first data structure 670 for adding, removing, and/or replacing entries.

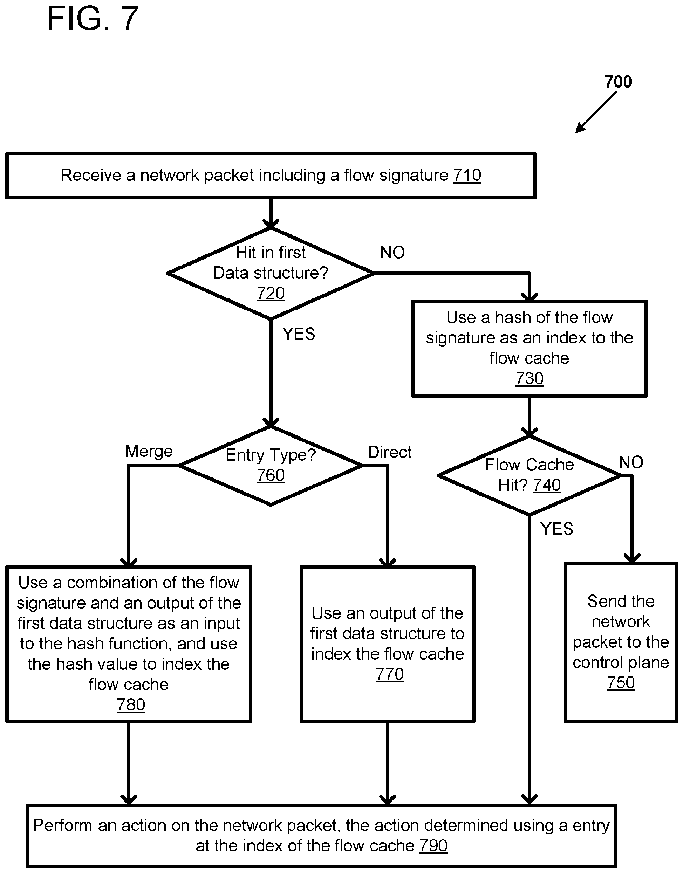

FIG. 7 is a flowchart of an example method 700 for processing network packets, such as at an intermediary server computer apparatus. As one example, the method 700 can be used by a data plane to potentially decrease a latency of processing network packets that are offloaded to a hardware accelerator. For example, the method 700 can be implemented by an intermediary server computer apparatus 600, such as described above in reference to FIGS. 1-6. For example, computer-executable instructions for carrying out the method 700 can be stored in a computer-readable memory of the intermediary server computer apparatus 600, and the instructions can be executed by a processor of the intermediary server computer apparatus 600 to perform the method 700.

At 710, a network packet can be received. The network packet can include a flow signature corresponding to a network packet flow. For example, the flow signature can include packet fields from layers 2-4 of the OSI model. The packet fields can uniquely identify network packets of the network packet flow. At 720, it can be determined whether all or a portion of the flow signature hits in a first data structure. For example, the first data structure can be a binary or ternary CAM When the flow signature misses in the first data structure, the method 700 can continue at 730. When the flow signature hits in the first data structure, the method 700 can continue at 760.

At 730, after the flow signature misses in the first data structure, a hash of the flow signature can be used as an index to the flow cache. At 740, it can be determined whether the hash of the flow signature hit in the flow cache. For example, it can be determined whether there is a valid entry at the index generated from the hash of the flow signature. If there is a valid entry, the entry can include a full flow signature that corresponds to the entry. The full flow signature in the entry can be compared to the flow signature from the received packet to determine whether the signatures match. If the signatures match, there is a hit in the flow cache, but if the signatures do not match, there is a mis-and the flow cache. If there is a hit, the method 700 continues at 790. If there is a miss, the method 700 continues at 750. At 750, the received network packet can be sent to the control plane for processing.

At 760, an entry type of the entry in the first data structure can be determined. The entry type can be used to determine how the information within the entry will be used. For example, the entry type can be a merged type or a direct type. The direct type of entry can provide a direct reference to the flow cache. The merged type of entry can provide data that can be used to generate a reference to the flow cache. If the entry type is a direct type, the method can continue at 770, but if the entry type is a merged type, the method can continue at 780. At 770, an output of the first data structure can be used to index the flow cache. In other words, the output of a search of the first structure can be a location for directly accessing the flow cache. At 780, an output of the first data structure can be combined with the flow signature to generate a modified signature, and the modified signature can be hashed to create an index for the flow cache. As a specific example, the output of the first data structure can include data that replaces a portion of the bits of the flow signature. The specific bits of the replaced can also be an output of the first data structure. The modified flow signature can be used as an input to the hash function and the output of the hash function can be used as the index for the flow cache.

At 790, an action can be performed on the received network packet. The action can be specified by the entry at the index of the flow cache. For example, the entry can include a data structure that includes information used to identify and process network packets of the network packet flow corresponding to the entry.

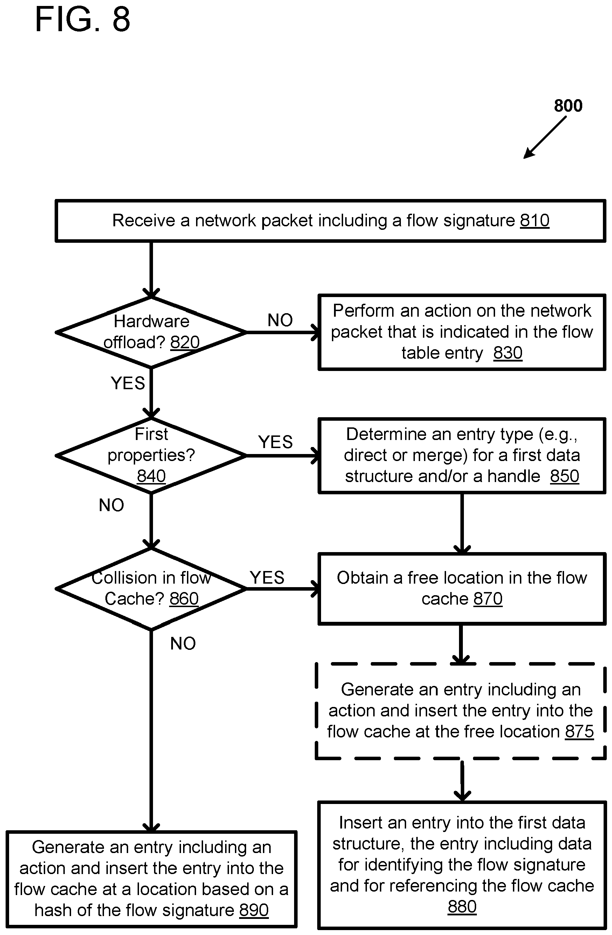

FIG. 8 is a flowchart of an example method 800 for processing network packets, such as at an intermediary server computer apparatus. As one example, the method 800 can be used by a control plane to configure a data plane so that the data plane can selectively offload network packets to a hardware accelerator thereby reducing a latency of processing the selected network packets. For example, the selected network packets can be specified in a SLA to have a maximum latency (e.g., a guaranteed processing time). As one example, the method 800 can be implemented by an intermediary server computer apparatus 600, such as described above in reference to FIGS. 1-7. For example, computer-executable instructions for carrying out the method 800 can be stored in a computer-readable memory of the intermediary server computer apparatus 600, and the instructions can be executed by a processor of the intermediary server computer apparatus 600 to perform the method 800.

At 810, a network packet can be received. The network packet can include a flow signature corresponding to a network packet flow. For example, the flow signature can include packet fields from layers 2-4 of the OSI model. The packet fields can uniquely identify network packets of the network packet flow.

At 820, it can be determined whether network packets of the network packet flow are to be processed by the data plane (e.g., offloaded to configurable and/or special-purpose hardware). For example, the flow table can include an entry for the network packet flow that specifies whether the network packet flow is to be processed by the data plane or the control plane. For example, network packets specified for low latency can be processed by the data plane and network packets without low latency specifications can be processed by the control plane. As one example, the flow table can be managed by an administrator or a software agent of the intermediary server computer 600. If the network packets of the network packet flow are to be processed by the data plane, additional information about the network packets and/or data plane data structures can be analyzed, and the method 800 can continue at 840. If the network packets of the network packet flow are not to be processed by the data plane (e.g., the packets will be processed by the control plane), the method 800 can continue at 830.

At 830, the flow table can be searched to find an entry corresponding to the network packet flow of the received packet. The flow table entry can include an action to perform on the received network packet. The action specified by the flow table entry can be performed by the control plane. As one example, the action can be performed using a software routine executed by a processor.

At 840, network packets of the network packet flow are to be processed by the data plane. The received network packet can be further analyzed to determine whether properties of the network packet flow indicate that an entry in the first data structure is appropriate. In other words, it can be determined whether the network packet flow has "first properties." Several criteria can be used to determine the types of properties that indicate an entry in the first data structure is appropriate.

As one example, network packet flows associated with various traffic classifications can be determined to be preferentially allocated to the first data structure. For example, low latency traffic (such as voice over IP, streaming video, or other real time data) may be preferentially allocated to the first data structure. The low latency traffic may be identified using a VLAN identifier, a protocol, or other packet fields. For example, an administrator can identify the low latency traffic types a priori, and the traffic types can be added to the flow table, a list, or other data structure specifying the low latency traffic.

As another example, network packet flows having network signatures that may include varying values can be preferentially allocated to the first data structure. For example, the network flow signature may include fields that vary for different network packets within the same network packet flow. Example fields can include subnets within a network address field. The portion of the fields that vary can be masked off in the search data that is added to an entry of the first data structure. In other words, portions of a field within the network packet flow signature can be wildcarded so that multiple entries within the flow cache are not allocated for a single network packet flow. As another example, the network flow signature may include fields that indicate the network packet is to be processed in a particular way. For example, the values in some fields may indicate that the network packet is potentially being used for a DOS attack. In other words, the network packet may meet the criteria of a DOS vector. In this case, other network packet fields that might be used to determine how to process the packet may be overridden because of the special processing that is to be performed. As described further below (see 850), it may be helpful to replace some of the fields within the network flow signature with a value that masks off the fields that are less important for the processing of the packet.

If it is determined that the network packet has first properties (e.g., the packet is classified as a low latency packet, the network packet flow signature has fields that can be wildcarded, or the network packet flow signature indicates special processing) then the method 800 can continue at 850, otherwise the method 800 can continue at 860.

At 850, an entry for the network packet flow is to be added to the first data structure. There can be different types of entries that are used in the first data structure. Alternatively, there can be multiple types of the first data structures, where each type of the first data structure corresponds to a different way to interpret the entries of the respective first data structures. One entry type is a direct type, indicating that the entry includes data that is to be used as a direct reference to an entry of the flow cache. As one example, the direct type can be used for low latency packets and wildcard packets. Another entry type is a merge type, indicating that the entry includes data that is to be merged (e.g., combined) with the network packet flow signature before generating an index to the flow cache. As one example, the merge type can be used for network packets that are identified for special processing. The data that will be merged with the network packet flow signature is referred to as a handle. Each type of special processing can be assigned a different handle. For example, twenty different handles can be assigned for twenty different DOS vectors.

At 860, it can be determined whether there is a collision in the flow cache for the network packet flow signature. For example, if the network packet flow signature of the received packet hashes to the same value as an earlier received packet that is to be processed by the data plane, a collision will occur. An entry for the received network packet flow will be added to the first data structure when there is a collision. If it is determined that a collision has occurred, the method 800 can continue at 870. If no collision occurs, the method 800 can continue at 890.

At 870, respective entries for the network packet flow are to be added to both the first data structure and the flow cache. For example, the first data structure can be used to initially identify a network packet belonging to a network packet flow and the flow cache can be used to store additional information about the network packet flow (such as actions to perform on the network packets of the network packet flow). For example, the number of bytes to identify a network packet flow can be relatively smaller than the number of bytes to specify action(s) to perform on network packets of the network packet flow. By separating the information about a network packet flow into the different data structures, the first data structure can potentially be smaller and faster compared to if all of the information were stored in the first data structure. The additional information about the network packet flow can be stored at a free location in the flow cache. For example, the free location in the flow cache can be obtained from a flow reservation system that tracks which entries within the flow cache are currently being used.

At optional 875, an entry for the flow cache can be generated and inserted into the flow cache at the free location. The flow cache entry can include an action to perform on network packets of the network packet flow. The flow cache entry can also include identifying information for the network packet flow, such as the flow signature. When the entry type is a merge because the network packet flow signature indicates special processing, and existing entry in the flow cache may have already been generated and so 875 can be omitted. The flow cache entries referenced by direct entries of the first data structure can be accessed without performing a hash on the output of the first data structure.

At 880, an entry can be inserted into the first data structure. The entry can include information for identifying the flow signature (e.g., the entry can include at least a portion of the flow signature). Specifically, the entry of the first data structure can include data that is used to identify a network packet of the network packet flow. The entry can include a direct or indirect reference to the flow cache. For example, when the entry is a direct type, the entry can include a direct reference to the free location of the flow cache obtained at 870. When the entry is a merge type, the entry can include a handle which can be combined with the network packet flow signature to generate a modified signature. The modified signature can be hashed and the hash value can reference a location within the flow cache.

At 890 an entry for the flow cache can be generated and inserted into the flow cache at a location that is based on a hash of the flow signature. For example, the location can be the hash value from using all of the bits of the flow signature as an input to the hash function. The flow cache entry can include an action to perform on network packets of the network packet flow. The flow cache entry can also include identifying information for the network packet flow, such as the flow signature. For this type of entry, the flow cache operates similar to a hash table. Accordingly, the flow cache can have different access mechanisms where one access mode references the flow cache entries using a hash value and a different access mode references the flow cache entries using direct addresses.

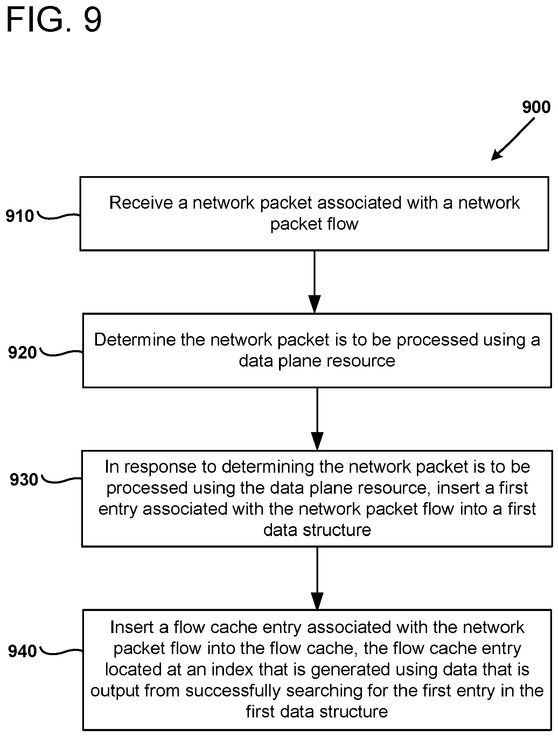

FIG. 9 is a flowchart of an example method 900 for processing network packets, such as at an intermediary server computer apparatus. As one example, the method 900 can be used by a control plane to configure a data plane so that the data plane can selectively offload network packets to a hardware accelerator thereby reducing a latency of processing the selected network packets. As one example, the method 900 can be implemented by an intermediary server computer apparatus 600, such as described above in reference to FIGS. 1-8. For example, computer-executable instructions for carrying out the method 900 can be stored in a computer-readable memory of the intermediary server computer apparatus 600, and the instructions can be executed by a processor of the intermediary server computer apparatus 600 to perform the method 900.

At 910, a network packet associated with a network packet flow can be received. The network packet flow can be identified using a flow signature of the network packet. For example, the flow signature can include packet fields from layers 2-7 of the OSI model. The network packet can be part of a connectionless or a connection-oriented protocol. In a connection-oriented protocol (e.g., TCP), a communication session can be established for a period when the network packets can flow between agents (e.g., a client and the server) of the communication session. In a connectionless protocol (e.g., a UDP), network packets can flow between agents without setting up a communication session.

At 920, it can be determined that the network packet is to be processed using a data plane resource, such as special-purpose hardware. For example, the special-purpose hardware can include circuitry for accelerating operations used during packet processing. The special-purpose hardware can include configurable hardware that has been programmed to perform operations used during packet processing. As one example, all or a portion of the flow signature can be used to search for an entry of a flow table corresponding to the network packet flow. The flow table entry can include information about the network packet flow, such as whether network packets of the flow are to be processed and hardware or software. The flow table can be populated by an administrator of the intermediary server computer and/or by a software agent.

At 930, in response to determining that the network packet is to be processed using the data plane resource, a first entry associated with the network packet flow can be inserted into a first data structure. The first data structure is a data structure that is used in addition to a flow cache. The first data structure is organized differently than the flow cache. For example, the first data structure can be an associative memory (such as a binary or ternary CAM) and the flow cache can be organized as table that is accessed using a direct address or by hashing a value to generate an address. The first entry can include data that is output during a successful search of the first data structure for the first entry. As one example, the first entry can include a direct reference to the flow cache. As another example, the first entry can include a handle that can be used to generate an address to the flow cache. The handle can be combined with the flow signature to generate a modified signature, and the modified signature can be hashed to generate a hash value that can be used as an address to the flow cache. The first entry can include additional information, such as control information to determine how to interpret data stored in the first entry.

At 940, a flow cache entry associated with the network packet flow can be inserted into the flow cache. The flow cache entry can be located at an index that is generated using data that is output from successfully searching for the first entry in the first data structure. For example, the output can be from a first entry that is a direct type including data for directly referencing the flow cache. In other words, the first data structure can output a direct reference (e.g., an address) for accessing the flow cache. As another example, the output can be from a first entry that is a merged type including data that can be combined with other data to generate a reference for accessing the flow cache. Specifically, the first data structure entry can output a handle, and the handle can be combined with the flow signature to create a modified signature, and the modified signature can be hashed to generate the reference to access the flow cache. The entry of the flow cache can include various information, such as data for identifying the network packet flow (e.g., all or a portion of the flow signature) and information for specifying one or more operations to perform on packets of the network packet flow. The flow cache entry can be inserted into the flow cache before the first entry is inserted into the first data structure (e.g., 930 and 940 can be reordered) in order to ensure that the first entry will not temporarily reference a stale or invalid entry in the flow cache.

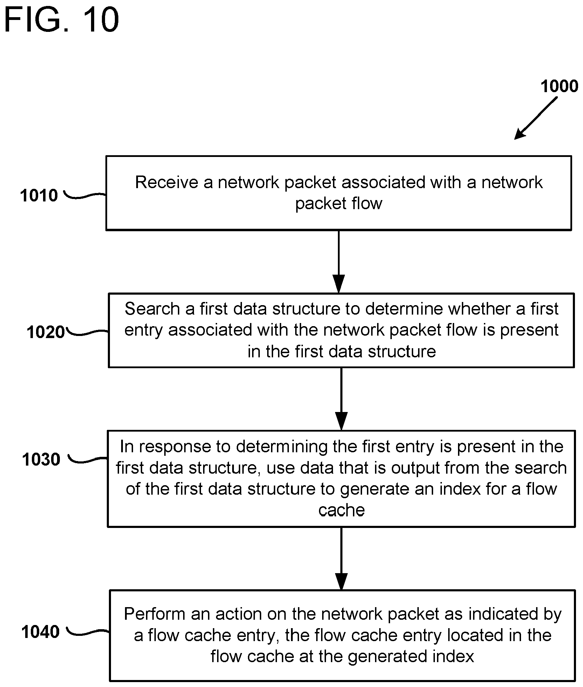

FIG. 10 is a flowchart of an example method 1000 for processing network packets, such as at an intermediary server computer apparatus. As one example, the method 1000 can be used by a data plane to potentially decrease a latency of processing network packets that are offloaded to a hardware accelerator. For example, the method 1000 can be implemented by an intermediary server computer apparatus 600, such as described above in reference to FIGS. 1-9. For example, computer-executable instructions for carrying out the method 1000 can be stored in a computer-readable memory of the intermediary server computer apparatus 600, and the instructions can be executed by a processor of the intermediary server computer apparatus 600 to perform the method 1000.

At 1010, a network packet associated with a network packet flow can be received. The network packet flow can be identified using a flow signature of the network packet. For example, the flow signature can include packet fields from layers 2-7 of the OSI model. The network packet can be part of a connectionless or a connection-oriented protocol.

At 1020, a first data structure can be searched to determine whether a first entry associated with the network packet flow is present in the first data structure. The first data structure can be used to identify some of the network packet flows that are to be processed by data plane resources, such as special-purpose and/or configurable hardware. For example, the special-purpose and/or configurable hardware can be configured to operate as a hardware accelerator for processing network packets. As one example, the first data structure can include an associative memory, such as a binary or ternary CAM. The entries of the CAM can include complete and/or partial flow signatures of network packet flows that are to be processed by the data plane resources. Accordingly, all or a portion of the flow signature of the received network packet can be compared to the complete and/or partial flow signatures stored in the CAM to determine whether the received network packet will be processed by the data plane resources. A successful search of the first data structure occurs when the full or partial flow signature being searched for is present within the stored data of the first data structure.

At 1030, in response to determining the first entry is present in the first data structure, data that is output from the search of the first data structure can be used to generate an index for the flow cache. For example, the data output from the first data structure can be a direct reference to the flow cache. The direct reference can be used to directly address the flow cache. As another example, the data output from the first data structure can be a handle. The handle can be combined with at least a portion of the flow signature to generate a modified signature. The modified signature can be hashed to generate a hash value that can be used to address the flow cache. Because the first data structure can output either direct references or handles, control information from the first entry can be used to determine the type of output from the first data structure. Accordingly, generating the index for the flow cache can include choosing between using the data that is output from the search of the first data structure directly as the index for the flow cache or using a combination of the data that is output from the search of the first data structure and at least a portion of a network flow signature to generate the index for the flow cache.

At 1040, an action can be performed on the network packet as indicated by a flow cache entry. The flow cache entry can be located in the flow cache at that index generated at 1030. The flow cache can include different types of entries such as entries having indexes generated using only network flow signatures of the network flows and entries having indexes generated using outputs (e.g., handles) from the first data structure. The action performed can include implementing a blacklist, implementing a whitelist, implementing a graylist, performing a flow transformation, generating a SYN cookie, generating an ACK cookie, and mitigating a DOS attack based on a DOS vector.

### Example Computing Environment

FIG. 11 illustrates a block diagram of a generalized example of a suitable computing environment 1100 that can be used to implement the examples, techniques, and technologies described herein. For example, the computing environment 1100 can be used to implement a network traffic management apparatus including an intermediary server that performs the disclosed techniques for managing network traffic flows.

The computing environment 1100 includes at least one processing unit 1110 and computer-readable memory 1120, which are coupled together by an interconnect 1130. The processing unit 1110 executes computer-executable instructions. The processing unit 1110 can include a general-purpose processor, a special-purpose processor, and combinations thereof. For example, the processing unit 1110 can include a general-purpose central processing unit (CPU), a graphics processor, a processor in an application-specific integrated circuit (ASIC), a processor configured to operate using programmable logic (such as in a field-programmable gate array (FPGA)), and/or any other type of processor. In a multi-processing system, multiple processing units can be used to execute computer-executable instructions to increase processing power.

The memory 1120 stores software 1140 implementing one or more innovations described herein, in the form of computer-executable instructions suitable for execution by the processing unit 1110. Specifically, the memory 1120 can be used to store computer-executable instructions, data structures, input data, output data, and other information. The memory 1120 can include volatile memory (e.g., registers, cache, random-access memory (RAM)), non-volatile memory (e.g., read-only memory (ROM), electrically-erasable programmable ROM (EEPROM), and flash memory), and/or combinations thereof. The memory 1120 can include operating system software (not illustrated). Operating system software can provide an operating environment for other software executing in the computing environment 1100 and can coordinate activities of the components of the computing environment 1100.

The interconnect 1130 is used to connect different components of the computing environment 1100 together so that the processing unit 1110 can communicate with the different components and/or so that the different components can communicate with each other. For example, the interconnect 1130 can include a bus, controller, and/or a network. As one example, the interconnect 1130 can include a host bridge (also referred to as a northbridge) for connecting the processing unit 1110 to relatively high-speed components (such as the memory 1120) and an input/output bridge (also referred to as a southbridge) for connecting to relatively lower-speed components (such as a communications interface 1150) within the computing environment 1100. In some examples, one or more components of the computing environment 1100 can be integrated within or connected directly to the processing unit 1110.

The computing environment 1100 can include a communication interface 1150 for communicating with another computing entity using a communication medium (e.g., a physical layer). The communication interface 1150 can implement all or a portion of a network protocol stack. The network protocol stack defines communication formats and rules for communicating between different devices connected to a network. For example, the network protocol stack can define modular layers for communication using the Open Systems Interconnection (OSI) model or another model. The OSI model standardizes and partitions a communication system into seven layers including a physical layer (referred to as layer 1) and an application layer (referred to as layer 7). The application layer can be used to define how applications access the communications subsystem. The physical layer defines the electrical and physical specifications for communication over a communication medium (also referred to as a physical transmission medium). The communication medium can be used to convey information, such as computer-executable instructions or other data, in a modulated data signal. A modulated data signal is a signal that has one or more of its characteristics adjusted in such a manner as to encode information in the signal. The communication interface 1150 can include electronic and/or optical circuitry to receive and transmit communications signals that are encoded (e.g., according to a physical layer specification of the network stack) using an electrical, optical, radio-frequency (RF), or another carrier signal. Accordingly, the communication interface 1150 can be used to communicate over wired connections (e.g., twisted-wire pair, coaxial cable, and fiber optic connections) and/or wireless technologies (e.g., Bluetooth, WiFi (IEEE 802.11), and cellular). As a specific example with reference to FIG. 1, a communication interface of the network traffic management apparatus 110 operatively couples to and communicates with the communication networks 130A and 130B so that the network traffic management apparatus 110 is coupled to and can communicate with the server computers 120A-N and the client computing devices 140A-N.

The computing environment 1100 can include storage 1160 that is used to store instructions for the software 1140, data structures, and data, which can be used to implement the technologies described herein. The storage 1160 can include electronic circuitry for reading and/or writing to removable or non-removable storage media using magnetic, optical, or other reading and writing system that is coupled to the processor. The storage 1160 can include read-only storage media and/or readable and writeable storage media, such as magnetic disks, solid state drives, magnetic tapes or cassettes, CD-ROMs, CD-RWs, DVDs, or any other medium which can be used to store information and that can be accessed within the computing environment 1100.

The computing environment 1100 can include input device(s) 1170. For example, the input device(s) 1170 can provide an input interface to a user of the computing environment 1100 and/or to receive inputs from a physical environment. The input device(s) 1170 can include a tactile input device (e.g., a keyboard, a mouse, or a touchscreen), a microphone, a camera, a sensor, or another device that provides input to the computing environment 1100.

The computing environment 1100 can include output device(s) 1180. For example, the output device(s) 1180 can provide an output interface to a user of the computing environment 1100 and/or to generate an output observable in a physical environment. The output device(s) 1180 can include a light-emitting diode, a display, a printer, a speaker, a CD-writer, or another device that provides output from the computing environment 1100. In some examples, the input device(s) 1170 and the output device(s) 1180 can be used together to provide a user interface to a user of the computing environment 1100.

The computing environment 1100 is not intended to suggest limitations as to scope of use or functionality of the technology, as the technology can be implemented in diverse general-purpose and/or special-purpose computing environments. For example, the disclosed technology can be practiced in a local, distributed, and/or network-enabled computing environment. In distributed computing environments, tasks are performed by multiple processing devices. Accordingly, principles and advantages of distributed processing, such as redundancy, parallelization, and replication also can be implemented, as desired, to increase the robustness and performance of the devices and systems of the examples. The examples may also be implemented on computer system(s) that extend across any suitable network using any suitable interface mechanisms and traffic technologies, including by way of example only, wireless traffic networks, cellular traffic networks, Packet Data Networks (PDNs), the Internet, intranets, and combinations thereof. As a specific example, a distributed computing environment can include the processing unit 1110 and the network-accessible computing environment 1190 that is linked through a communications network. In a distributed computing environment, program modules 1140 (including executable instructions for managing network traffic flows) can be located in both local and remote memory storage devices.

The term computer-readable media includes non-transient media for data storage, such as memory 1120 and storage 1160, and does not include transmission media such as modulated data signals and carrier waves. Any of the disclosed methods can be implemented as computer-executable instructions stored on one or more computer-readable media and executed on a computer (e.g., any commercially available computer). Any of the computer-executable instructions for implementing the disclosed techniques as well as any data structures and data created and used during implementation of the disclosed embodiments can be stored on one or more computer-readable storage media. For example, the computer-executable instructions can be part of a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network, or other such network) using one or more network-attached computers.

This disclosure is set forth in the context of representative examples that are not intended to be limiting. Accordingly, this disclosure is directed toward all novel and non-obvious features and aspects of the various disclosed examples, alone and in various combinations and sub-combinations with one another. Many variations of the specific hardware and software used to implement the examples are possible, as will be appreciated by those skilled in the relevant art with the benefit of this disclosure. The disclosed systems, methods, and apparatus are not limited to any specific aspect or feature or combinations thereof, nor does the disclosed technology require that any one or more specific advantages be present or problems be solved. Theories of operation, scientific principles, or other theoretical descriptions presented herein in reference to the disclosed technology have been provided for the purposes of better understanding and are not intended to be limiting in scope. The apparatus and methods in the appended claims are not limited to those apparatus and methods that function in the manner described by such theories of operation.

As used in this application the singular forms "a," "an," and "the" include the plural forms unless the context clearly dictates otherwise. The term "coupled" encompasses mechanical, electrical, magnetic, optical, as well as other practical ways of coupling or linking items together, and does not exclude the presence of intermediate elements between the coupled items. The term "and/or" means any one item or combination of items in the phrase.

The recited order of processing elements or sequences, or the use of numbers, letters, or other designations therefore, is not intended to limit the claimed processes to any order. Although the operations of some of the disclosed methods are described in a particular, sequential order for convenient presentation, it should be understood that this manner of description encompasses rearrangement, unless a particular ordering is required by specific claim language set forth below. For example, operations described sequentially may in some cases be rearranged or performed concurrently. Moreover, for the sake of simplicity, the attached figures may not show all of the various ways in which the disclosed methods can be used in conjunction with other methods.

It should also be well understood that any software functionality described herein can be performed, at least in part, by one or more hardware logic components, instead of software. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), and so forth.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, Java, or any other suitable programming language. Likewise, the disclosed technology is not limited to any particular computer or type of hardware. Certain details of suitable computers and hardware are well-known and need not be set forth in detail in this disclosure.

Having thus described many possible embodiments to which the principles of the invention may be applied, it will be recognized by those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the invention. Accordingly, the scope of the claimed subject matter is defined by the following claims. We therefore claim as our invention all that comes within the scope of these claims.

## Claims

1. A method implemented in cooperation with a network traffic management system comprising one or more network traffic management modules, networking modules, or server modules, the method comprising:
searching a first data structure to determine whether a first entry associated with a network flow is present in the first data structure;
in response to determining the first entry is present in the first data structure, using data that is output from the search of the first data structure to generate an index for a flow cache; and
performing an action on the network packet as indicated by a flow cache entry, the flow cache entry located in the flow cache at the generated index.

2. The method of claim 1, wherein the first data structure is a content addressable memory.

3. The method of claim 1, wherein searching the first data structure comprises searching for at least a portion of a network flow signature, the network flow signature including a plurality of packet fields of a received network packet of the network flow.

4. The method of claim 1, wherein generating the index for the flow cache comprises:
combining the data that is output from the search of the first data structure with at least a portion of a network flow signature to generate a modified signature; and
hashing the modified signature to generate the index for the flow cache.

5. The method of claim 1, wherein generating the index for the flow cache comprises using the data that is output from the search of the first data structure directly as the index for the flow cache.

6. The method of claim 1, wherein generating the index for the flow cache comprises choosing between using the data that is output from the search of the first data structure directly as the index for the flow cache or using a combination of the data that is output from the search of the first data structure and at least a portion of a network flow signature to generate the index for the flow cache.

7. The method of claim 1, wherein the flow cache comprises a first plurality of entries accessed using indexes generated using only network flow signatures of the network flows and a second plurality of entries accessed using indexes generated using outputs from the first data structure.

8. A system comprising one or more network traffic management modules, networking modules, or server modules, memory comprising programmed instructions stored thereon, and one or more processors configured to be capable of executing the stored programmed instructions to:
search a first data structure to determine whether a first entry associated with a network flow is present in the first data structure;
in response to determining the first entry is present in the first data structure, use data that is output from the search of the first data structure to generate an index for a flow cache; and
perform an action on the network packet as indicated by a flow cache entry, the flow cache entry located in the flow cache at the generated index.

9. The system of claim 8, wherein searching the first data structure comprises searching for at least a portion of a network flow signature, the network flow signature including a plurality of packet fields of a received network packet of the network flow.

10. The system of claim 8, wherein generating the index for the flow cache comprises:
combining the data that is output from the search of the first data structure with at least a portion of a network flow signature to generate a modified signature; and
hashing the modified signature to generate the index for the flow cache.

11. The system of claim 8, wherein generating the index for the flow cache comprises choosing between using the data that is output from the search of the first data structure directly as the index for the flow cache or using a combination of the data that is output from the search of the first data structure and at least a portion of a network flow signature to generate the index for the flow cache.

12. A non-transitory computer readable medium having stored thereon instructions comprising executable code that, when executed by one or more processors, causes the processors to:
search a first data structure to determine whether a first entry associated with a network flow is present in the first data structure;
in response to determining the first entry is present in the first data structure, use data that is output from the search of the first data structure to generate an index for a flow cache; and
perform an action on the network packet as indicated by a flow cache entry, the flow cache entry located in the flow cache at the generated index.

13. The computer readable medium of claim 12, wherein searching the first data structure comprises searching for at least a portion of a network flow signature, the network flow signature including a plurality of packet fields of a received network packet of the network flow.

14. The computer readable medium of claim 12, wherein generating the index for the flow cache comprises:
combining the data that is output from the search of the first data structure with at least a portion of a network flow signature to generate a modified signature; and
hashing the modified signature to generate the index for the flow cache.

15. The computer readable medium of claim 12, wherein generating the index for the flow cache comprises choosing between using the data that is output from the search of the first data structure directly as the index for the flow cache or using a combination of the data that is output from the search of the first data structure and at least a portion of a network flow signature to generate the index for the flow cache.

16. A network traffic management apparatus, comprising memory comprising programmed instructions stored thereon and one or more processors configured to be capable of executing the stored programmed instructions to:
search a first data structure to determine whether a first entry associated with a network flow is present in the first data structure;
in response to determining the first entry is present in the first data structure, use data that is output from the search of the first data structure to generate an index for a flow cache; and
perform an action on the network packet as indicated by a flow cache entry, the flow cache entry located in the flow cache at the generated index.

17. The network traffic management apparatus of claim 16, wherein searching the first data structure comprises searching for at least a portion of a network flow signature, the network flow signature including a plurality of packet fields of a received network packet of the network flow.

18. The network traffic management apparatus of claim 16, wherein generating the index for the flow cache comprises:
combining the data that is output from the search of the first data structure with at least a portion of a network flow signature to generate a modified signature; and
hashing the modified signature to generate the index for the flow cache.

19. The network traffic management apparatus of claim 16, wherein generating the index for the flow cache comprises choosing between using data that is output from the search of the first data structure directly as the index for the flow cache or using a combination of the data that is output from the search of the first data structure and at least a portion of a network flow signature to generate the index for the flow cache.

20. The network traffic management apparatus of claim 16, wherein the flow cache comprises a first plurality of entries accessed using indexes generated using only network flow signatures of the network flows and a second plurality of entries accessed using indexes generated using outputs from the first data structure.
